# EUROPÄISCHE PATENTSCHRIFT

(11) **EP 1 789 747 B1**
(45) Veröffentlichungstag und Bekanntmachung des Hinweises auf die Patenterteilung: **26.08.2015**
(21) Anmeldenummer: 05779056.0
(22) Anmeldetag: 14.09.2005
(51) Int. Cl.: F28F 27/02, F28F 27/00

(54) **WÄRMETAUSCHER**
HEAT EXCHANGER
ECHANGEUR THERMIQUE

(30) Priorität: 17.09.2004 DE 102004045238
(43) Veröffentlichungstag der Anmeldung: 30.05.2007
(73) Patentinhaber: Danfoss A/S, 6430 Nordborg (DK)
(72) Erfinder: BENONYSSON, Atli, DK-6400 Sønderborg (DK)
(74) Vertreter: Copsey, Timothy Graham
(86) Internationale Anmeldenummer: PCT/DK2005/000582
(87) Internationale Veröffentlichungsnummer: WO 2006/029629

(56) Entgegenhaltungen:
- EP-A- 0 029 129
- EP-A1- 0 916 816
- EP-B- 0 111 673
- US-A- 3 145 928
- US-B1- 6 182 749

## Beschreibung

Die Erfindung betrifft einen Wärmetauscher mit einem Gehäuse, in dem eine Primärseite mit einem ersten Strömungspfad zwischen einem Vorlaufanschluß und einem Rücklaufanschluß und eine Sekundärseite mit einem zweiten Strömungspfad zwischen einem Zuflußanschluß und einem Ablaufanschluß angeordnet ist, und mit einem Ventil zur Steuerung eines Durchflusses eines Wärmeträgerfluids durch die Primärseite.

Ein derartiger Wärmetauscher wird beispielsweise in Gebäuden verwendet, die von einem Fernheizungsnetz aus mit Wärme versorgt werden. Die Wärmeträgerflüssigkeit, die vom Fernheizungsnetz geliefert wird, durchströmt die Primärseite. Brauchwasser, das an einer dem Rücklaufanschluß nachgeschalteten Zapfstelle entnommen werden soll, wird dann beim Durchfließen der Sekundärseite erwärmt. Ähnliches gilt dann, wenn nicht Brauchwasser, sondern Heizungswasser erwärmt werden soll, das zur Beheizung des Gebäudes dient.

Vor allem dann, wenn das von der Fernheizung versorgte Gebäude relativ klein ist, beispielsweise ein kleineres Einfamilienhaus, möchte man den für den Wärmetauscher benötigten Bauraum so klein wie möglich halten. Dies ist allerdings nur begrenzt möglich. Man benötigt eine Verrohrung, um den Vorlaufanschluß und den Rücklaufanschluß mit dem Fernheizungsnetz zu verbinden. Der Zulaufanschluß muß mit einer Brauchwasserquelle, beispielsweise dem Trinkwassernetz, verbunden werden. Der Ablaufanschluß muß mit der hausinternen Warmwasserleitung verbunden werden.

US 6,182,749 B1 beschreibt einen Plattenwärmetauscher mit einem Gehäuse. Er hat eine Primärseite und eine Sekundärseite. Eine Ventilanordnung mit einem thermischen Sensor regelt den Durchfluss durch die Primärseite als Funktion der vom Sensor gemessenen Temperatur. Der Sensor ist durch ein Loch im Gehäuse in den Wärmetauscher eingesteckt und das Ventil ist in seiner Verlängerung angebracht, d.h. weg vom Gehäuse. Das Ventil ist einer Verrohrung angebracht, der mit dem Primäreingang verbunden ist, wobei es den Primärdurchfluss durch die Primärseite regeln kann.

EP 0 111 673 B1 beschreibt einen Wärmetauscher, der als Ölkühler ausgebildet ist. Eine Primärseite wird von Öl durchströmt, das gekühlt werden soll. Die Primärseite ist im Innern eines Gehäuses ausgebildet. In diesem Inneren sind mehrere Rohre angeordnet, die die Sekundärseite des Wärmetauschers bilden. Diese Rohre können von Kühlwasser durchströmt werden. Zur Steuerung der Kühlwassermenge ist ein Ventil vorgesehen, dessen Ventilelement über ein Dehnstoffelement vom Ventilsitz weggestoßen werden kann, das sich bei steigender Temperatur des primärseitigen Einlaufs ausdehnt. Der Ölkühler bewirkt also eine Steuerung des sekundärseitigen Einlasses, also der Menge des Kühlwassers, als Funktion der Temperatur des Primäreinlaufs, also der Temperatur des Öls.

Der Erfindung liegt die Aufgabe zugrunde, einen Wärmetauscher kompakt zu gestalten.

Diese Aufgabe wird durch einen Wärmetauscher gemäß Anspruch 1 gelöst.

Mit dieser Ausgestaltung ist es möglich, das Ventil direkt zu steuern, ohne daß man eine wesentliche Vergrößerung des Bauraums befürchten müßte. Das Dehnstoffelement dehnt sich bei Temperaturerhöhung aus und zieht sich bei einer Absenkung der Temperatur zusammen. Diese Volumenänderung kann verwendet werden, um das Ventil, das den Durchfluß von Wärmeträgerfluid durch die Primärseite steuert, entsprechend anzusteuern. Der Zusammenhang ist hierbei relativ einfach. Wenn eine Zapfstelle, beispielsweise ein Warmwasserhahn, geöffnet wird, um warmes Brauchwasser zu entnehmen, dann strömt kälteres Wasser in den Zulaufanschluß hinein. Sobald das kältere Wasser das Dehnstoffelement erreicht, ändert das Dehnstoffelement sein Volumen. Diese Volumenänderung kann verwendet werden, um das Ventil zu öffnen. Die Öffnung des Ventils bewirkt, daß heißes Wärmeträgerfluid durch die Primärseite strömt und seine Wärme an das Brauchwasser auf der Sekundärseite abgeben kann. Diese Wärmeübertragung führt zu einer entsprechenden Temperaturerhöhung des Brauchwassers, die wiederum vom Dehnstoffelement direkt erfaßt werden kann. Die damit einhergehende Volumenvergrößerung des Dehnstoffelements kann wieder unmittelbar verwendet werden, um das Ventil zu drosseln. Es ergibt sich ein kleiner Regelkreis, der relativ schnell arbeitet und ohne größeren baulichen Aufwand außen, d.h. außerhalb des Gehäuses des Wärmetauschers, arbeiten kann. Man kann mit relativ einfachen Mitteln die Temperatur des Wassers auf der Sekundärseite konstant halten.

Das Dehnstoffelement ist im Bereich des Ablaufanschlusses angeordnet. Damit erfaßt das Dehnstoffelement im Prinzip die Temperatur des Brauchwassers, das den Wärmetauscher verläßt. Diese Temperatur soll einem Sollwert entsprechen. Man kann dann die Wirkungen des Dehnstoffelements unmittelbar ausnützen, ohne noch auf eine weitere Erwärmung des Brauchwassers bei einem Durchfluß in Strömungsrichtung hinter dem Dehnstoffelement Rücksicht nehmen zu müssen.

Auch ist von Vorteil, wenn das Dehnstoffelement mit dem Ventil direkt gekoppelt ist. Man spart sich dann Kraftübertragungselemente, beispielsweise eine hydraulische Übertragung von Flüssigkeit durch einen Schlauch oder eine andere Leitung oder einen mechanischen Stößel. Wenn das Dehnstoffelement direkt mit dem Ventil gekoppelt ist, kann man den Bauraum im Innern des Gehäuses des Wärmetauschers gut ausnutzten.

Vorzugsweise weist das Dehnstoffelement einen nicht-kompressiblen Dehnstoff auf. In diesem Fall bekommt man einen eindeutigen Weg-Temperatur-Zusammenhang, d.h. zu jeder Temperatur des Dehnstoffelements gehört auch ein bestimmtes Volumen, das unmittelbar an das Ventil weitergegeben werden kann, ohne dieses zu betätigen. Bei einer Gasfüllung, die ein kompressibles Verhalten zeigt, erhält man ein Temperatur-Kraft-Verhalten, so daß das Temperatur-Weg-Verhalten noch von äußeren Kräften abhängt, die auf das Ventil wirken.

Bevorzugterweise ist der Dehnstoff durch Wachs oder eine Flüssigkeit gebildet. Sowohl Wachs als auch Flüssigkeit haben ein ausreichendes nicht-kompressibles Verhalten. Die Volumenänderung, die Wachs oder eine entsprechende Flüssigkeit mit der Temperatur aufweist, reicht aus, um das Ventil in ausreichendem Maße zu öffnen oder zu schließen.

Hierbei ist besonders bevorzugt, daß das Dehnstoffelement im Wärmetauscher parallel zu seiner Wirkrichtung positionierbar ist. Durch eine Veränderung der Lage des Dehnstoffelements im Wärmetauscher läßt sich also eine Voreinstellung realisieren. Mit anderen Worten kann man über eine Verlagerung des Dehnstoffelements im Wärmetauscher den Sollwert der Temperatur einstellen, die die Flüssigkeit am Ablaufanschluß haben soll. Eine derartige Verlagerung läßt sich beispielsweise dadurch realisieren, daß das Dehnstoffelement in das Gehäuse des Wärmetauschers eingeschraubt ist. Durch ein Verdrehen des Dehnstoffelements um die Schraubachse läßt sich dann die gewünschte Positionsänderung erreichen.

Auch ist von Vorteil, wenn das Ventil und die Betätigungseinrichtung auf der gleichen Höhe, bezogen auf das Gehäuse, angeordnet sind. Damit kann man kurze Wege realisieren, d.h. der Einfluß der Temperatur auf Übertragungselemente zwischen der Betätigungseinrichtung und dem Ventil kann klein gehalten werden.

Vorzugsweise ist das Ventil am Vorlaufanschluß angeordnet, und der Vorlaufanschluß und der Ablaufanschluß sind einer gemeinsamen Kante des Gehäuses benachbart angeordnet. Vereinfacht ausgedrückt bilden der Vorlaufanschluß, der Rücklaufanschluß, der Zulaufanschluß und der Ablaufanschluß vier Eckpunkte eines Vierecks, vorzugsweise eines Rechtecks, wobei die beiden Strömungspfade jeweils "diagonal" verlaufen. In diesem Fall kann man dafür sorgen, daß der Vorlaufanschluß und der Ablaufanschluß an einer kurzen Seite dieses Vierecks angeordnet sind, so daß sie eine Nähe zueinander aufweisen, die ausreichend ist, daß die Übertragungsstrecke zwischen der Betätigungseinrichtung und dem Ventil kurz bleibt.

Das Ventil ist im Gehäuse angeordnet. Man benötigt also außerhalb des Gehäuses keinen zusätzlichen Stauraum. Die Integration der Betätigungseinrichtung und des Ventils kann einfach vorgenommen werden.

Bevorzugterweise ist das Ventil von einer Öffnungsfeder in Öffnungsrichtung und vom Dehnstoffelement in Schließrichtung beaufschlagt. Dies ist eine relativ einfache Steuerungsmöglichkeit, die eine unmittelbare Beaufschlagung des Ventils ohne Umlenkung erlaubt. Wenn sich das Dehnstoffelement mit steigender Temperatur ausdehnt, dann muß das Ventil weiter geschlossen werden, um die Wärmeübertragung von der Primärseite auf die Sekundärseite abzuschwächen. Wenn die Temperatur auf der Sekundärseite sinkt, dann zieht sich das Dehnstoffelement zusammen und das Ventil wird weiter geöffnet, so daß der Primärseite wieder mehr Wärme zugeführt wird, die dann auf die Sekundärseite übertragen wird, um eine entsprechende Temperaturerhöhung zu bewirken.

Der Wärmetauscher ist als Platten-Wärmetauscher ausgebildet. Ein Platten-Wärmetauscher hat eine relativ große Wärmeübergangsfläche. Er ist durch profilierte Platten gebildet, die teilweise aneinanderliegen und teilweise einen Abstand zueinander aufweisen, so daß ein Querschnitt nach Art einer Wabenstruktur gebildet wird. Hier können die Primärseite und die Sekundärseite praktisch gleiche Strömungsquerschnitte aufweisen, so daß man auf der Primärseite und auf der Sekundärseite prinzipiell das gleiche Wärmeträgermedium verwenden kann.

Die Erfindung wird im folgenden anhand eines bevorzugten Ausführungsbeispiels in Verbindung mit der Zeichnung näher beschrieben. Hierin zeigen:
- Fig. 1: eine schematische Darstellung eines Wärmetauschers und
- Fig. 2: eine schematische Vorderansicht des Wärmetauschers.

Ein Wärmetauscher 1 weist ein Gehäuse 2 auf, in dem eine Primärseite 3 und eine Sekundärseite 4 angeordnet sind. Die Primärseite 3 weist einen ersten Strömungspfad 5 auf, der zwischen einem Vorlaufanschluß 6 und einem Rücklaufanschluß 7 angeordnet ist. Der erste Strömungspfad 5 wird in Richtung eines Pfeils 8 von einem Wärmeträgermedium, beispielsweise heißem Wasser aus einer Fernheizungsanlage, durchströmt.

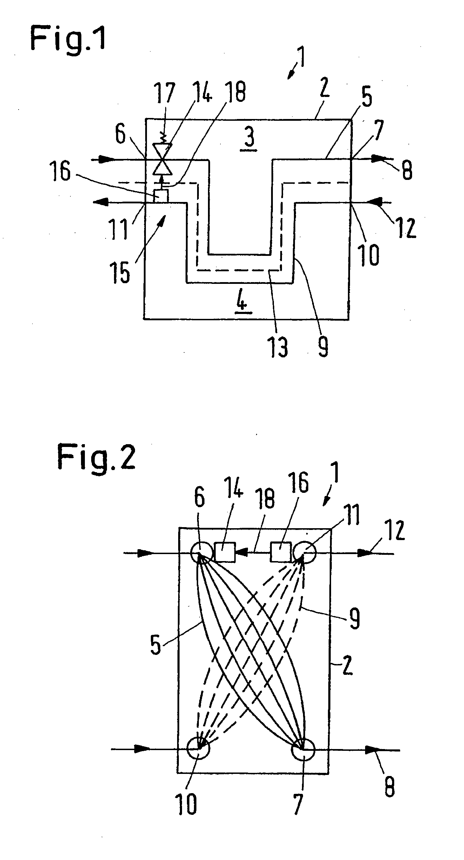

Die Sekundärseite 4 weist einen zweiten Strömungspfad 9 auf, der zwischen einem Zulaufanschluß 10 und einem Ablaufanschluß 11 angeordnet ist. Der zweite Strömungspfad 9 wird in Richtung eines Pfeils 12 durchströmt. Wie dies aus Fig. 1 zu erkennen ist, werden der erste Strömungspfad 5 und der zweite Strömungspfad 9 in entgegengesetzte Richtungen durchströmt.

Gestrichelt dargestellt ist eine Linie 13, die eine Wärmeübergangsfläche symbolisieren soll, durch die Wärme von der Primärseite, d.h. dem ersten Strömungspfad 5, auf die Sekundärseite 4, d.h. den zweiten Strömungspfad 9, übergehen kann, wenn dem Zulaufanschluß 10 kaltes Brauchwasser und dem Vorlaufanschluß 6 heißes Heizwasser zugeführt wird. Natürlich weist ein echter Wärmetauscher nicht nur die beiden linienförmig dargestellten Strömungspfade 5, 9 auf, sondern man verwendet beispielsweise eine Vielzahl von gewellten Platten, die so zusammengesetzt werden, daß im Querschnitt wabenförmig ausgebildete Kanäle entstehen, die jeweils abwechselnd zur Primärseite 3 und zur Sekundärseite 4 gehören. Der Aufbau eines derartigen Wärmetauschers an sich ist dem Fachmann bekannt. Es handelt sich also um einen Platten-Wärmetauscher, bei dem die Wärmeübergangsfläche im Verhältnis zum Volumen relativ groß gemacht werden kann.

Im ersten Strömungspfad 5 auf der Primärseite 3 ist ein Ventil 14 angeordnet, mit dessen Hilfe eine Strömung durch den ersten Strömungspfad 5 beeinflußt wird. Das Ventil 14 erlaubt eine größere oder eine kleinere Durchströmung oder drosselt die Durchströmung des Wärmeträgerfluids durch den ersten Strömungspfad 5 ganz. Damit wird gleichzeitig auch die Wärmemenge beeinflußt, die der Primärseite 3 zugeführt wird und die dementsprechend auf die Sekundärseite 4 übertragen wird. Solange auf der Sekundärseite 4 keine Wärme notwendig ist, weil beispielsweise kein Brauchwasser vom Ablaufabschluß 11 entnommen wird, kann das Ventil 14 geschlossen bleiben.

Das Ventil ist, wie dies schematisch in Fig. 1 dargestellt ist, im Gehäuse 2 eingebaut, d.h. man benötigt außen weder Anbauteile noch eine zusätzliche Verbohrung, um das Ventil 14 mit dem ersten Strömungspfad 5 zu verbinden.

Das Ventil 14 steht in Wirkverbindung mit einer Betätigungseinrichtung 15, die ein Dehnstoffelement 16 aufweist. Das Dehnstoffelement steht in wärmeleitender Verbindung mit der Außenwand des zweiten Strömungspfades 9 am Ablaufanschluß 11, d.h. das Dehnstoffelement wird von der Temperatur des aus dem Wärmetauscher 1 austretenden Brauchwassers (einer anderen erwärmten Flüssigkeit) beaufschlagt.

Das Dehnstoffelement 16 weist Wachs oder eine nicht kompressible Flüssigkeit als Dehnstoff auf. Bei einem derartigen Dehnstoff existiert ein eindeutiger Zusammenhang zwischen der Temperatur am Ablaufanschluß 11 und dem Volumen, das der Dehnstoff einnimmt. Das Dehnstoffelement 16 kann beispielsweise als Balgenelement ausgebildet sein, das über einen nur schematisch durch einen Pfeil dargestellten Stößel 18 auf das Ventil 14 wirkt.

Das Ventil 14 weist eine Öffnungsfeder 17 auf, die das Ventil 14 in Öffnungsrichtung beaufschlagt. In Abwesenheit von weiteren äußeren Kräften ist das Ventil 14 also normalerweise geöffnet. Dementsprechend fließt Wärmeträgerflüssigkeit durch den ersten Strömungspfad 5 auf der Primärseite 3, so daß Wärme auf die Flüssigkeit übertragen wird, die sich im zweiten Strömungspfad 9 befindet. Dadurch erwärmt sich auch das Dehnstoffelement 16 und dehnt sich aus. Diese Ausdehnung wird nun über den Stößel 18 auf das Ventil 14 so übertragen, daß das Ventil stärker drosselt oder sogar schließt. Man erhält also einen kleinen Regelkreis, der dafür sorgt, daß die Temperatur des aus dem Ablaufanschluß 11 austretenden Wassers (oder einer anderen Flüssigkeit) immer auf einem Sollwert gehalten werden kann, den man vorher einstellt.

Zur Einstellung dieses Sollwerts ist das Dehnstoffelement 16 im Gehäuse 2 geringfügig verlagerbar, und zwar in seiner Wirkrichtung. Dies läßt sich beispielsweise dadurch erreichen, daß man das Dehnstoffelement 16 in das Gehäuse 2 einschraubt, wobei die Schraubachse der Wirkrichtung entspricht. Wenn man nun das Dehnstoffelement 16 weiter in das Gehäuse 2 hineinschraubt, dann erhält man beispielsweise bei geringeren Temperaturen am Ablaufanschluß 11 bereits ein schließendes Ventil 14.

Fig. 2 zeigt nun schematisch eine Vorderansicht des Wärmetauschers 1, aus der die einzelnen Positionen der Anschlüsse ersichtlich sind. Gleiche Elemente sind mit den gleichen Bezugszeichen wie in Fig. 1 gekennzeichnet.

Es ist zu erkennen, daß der Vorlaufanschluß 6, der Ablaufanschluß 11, der Rücklaufanschluß 7 und der Zulaufanschluß 10 vier Eckpunkte eines Rechtecks bilden, wobei der Vorlaufanschluß 6 und der Ablaufanschluß 11 an der kurzen Seite dieses Rechtecks benachbart angeordnet sind. Dementsprechend sind der Vorlaufanschluß 6 und der Ablaufanschluß 11 räumlich eng benachbart angeordnet, so daß der Stößel 18 zwischen dem Dehnstoffelement 16 und dem Ventil 14 relativ kurz gehalten werden kann.

Der erste Strömungspfad 5, der hier mit durchgezogenen Linien dargestellt ist, verläuft diagonal. Der zweite Strömungspfad 9, der mit gestrichelten Linien dargestellt ist, verläuft ebenfalls diagonal, wobei, wie oben ausgeführt, der innere Aufbau des Wärmetauschers 1 hier nicht realistisch, sondern nur schematisch dargestellt ist.

## Patentansprüche

1. Wärmetauscher mit einem Gehäuse, in dem eine Primärseite (3) mit einem ersten Strömungspfad (5) zwischen einem Vorlaufanschluß (6) und einem Rücklaufanschluß (7) und eine Sekundärseite (4) mit einem zweiten Strömungspfad (9) zwischen einem Zuflußanschluß (10) und einem Ablaufanschluß (11) angeordnet ist, mit einem Ventil (14) zur Steuerung eines Durchflusses eines Wärmeträgerfluids durch die Primärseite (3), wobei das Ventil eine Betätigungseinrichtung (15) mit einem Dehnstoffelement (16) aufweist, das im Bereich des Ablaufanschlusses (11) angeordnet ist, und das Dehnstoffelement von der Temperatur auf der Sekundärseite beaufschlagt ist, wobei der Wärmetauscher als Platten-Wärmetauscher ausgebildet ist, **dadurch gekennzeichnet, dass** das Ventil (14) im Gehäuse (2) angeordnet ist, und dass das Dehnstoffelement (16) in wärmeleitender Verbindung mit der Außenwand des zweiten Strömungspfades am Ablaufanschluß steht.

2. Wärmetauscher nach Anspruch 1, **dadurch gekennzeichnet, daß** das Dehnstoffelement (16) direkt mit dem Ventil (14) gekoppelt ist.

3. Wärmetauscher nach einem der Ansprüche 1 bis 2, **dadurch gekennzeichnet, daß** das Dehnstoffelement (16) einen nicht-kompressiblen Dehnstoff aufweist.

4. Wärmetauscher nach Anspruch 3, **dadurch gekennzeichnet, daß** der Dehnstoff durch Wachs oder eine Flüssigkeit gebildet ist.

5. Wärmetauscher nach einem der Ansprüche 1 bis 4, **dadurch gekennzeichnet, daß** das Dehnstoffelement (16) im Wärmetauscher (1) parallel zu seiner Wirkrichtung positionierbar ist.

6. Wärmetauscher nach einem der Ansprüche 1 bis 5, **dadurch gekennzeichnet, daß** das Ventil (14) und die Betätigungseinrichtung (15) auf der gleichen Höhe, bezogen auf das Gehäuse (2), angeordnet sind.

7. Wärmetauscher nach Anspruch 6, **dadurch gekennzeichnet, daß** das Ventil (14) am Vorlaufanschluß (6) angeordnet ist und der Vorlaufanschluß (6) und der Ablaufanschluß (11) einer gemeinsamen Kante des Gehäuses (2) benachbart angeordnet sind.

8. Wärmetauscher nach einem der Ansprüche 1 bis 7, **dadurch gekennzeichnet, daß** das Ventil (14) von einer Öffnungsfeder (17) in Öffnungsrichtung und vom Dehnstoffelement (16) in Schließrichtung beaufschlagt ist.

## Claims

1. Heat exchanger having a housing in which a primary side (3), with a first flow path (5) between a feed port (6) and a return port (7), and a secondary side (4), with a second flow path (9) between an inflow port (10) and an outflow port (11), are arranged, having a valve (14) for controlling a throughflow of a heat carrier fluid through the primary side (3), wherein the valve has an actuation device (15) with an expansion element (16) which is arranged in the region of the outflow port (11), and the expansion element is exposed to the temperature on the secondary side, wherein the heat exchanger is in the form of a plate-type heat exchanger, **characterized in that** the valve (14) is arranged in the housing (2) and **in that** the expansion element (16) is connected in heat-conducting fashion to the outer wall of the second flow path at the outflow port.

2. Heat exchanger according to Claim 1, **characterized in that** the expansion element (16) is directly coupled to the valve (14).

3. Heat exchanger according to either of Claims 1 and 2, **characterized in that** the expansion element (16) has a non-compressible expansion material.

4. Heat exchanger according to Claim 3, **characterized in that** the expansion material is formed by wax or a liquid.

5. Heat exchanger according to one of Claims 1 to 4, **characterized in that** the expansion element (16) can be positioned in the heat exchanger (1) in parallel with respect to its direction of action.

6. Heat exchanger according to one of Claims 1 to 5, **characterized in that** the valve (14) and the actuation device (15) are arranged at the same level with respect to the housing (2).

7. Heat exchanger according to Claim 6, **characterized in that** the valve (14) is arranged at the feed port (6), and the feed port (6) and the outflow port (11) are arranged adjacent to a common edge of the housing (2).

8. Heat exchanger according to one of Claims 1 to 7, **characterized in that** the valve (14) is loaded in an opening direction by an opening spring (17) and in a closing direction by the expansion element (16).

## Revendications

1. Échangeur thermique comprenant un boîtier, dans lequel un côté primaire (3) avec un premier chemin d'écoulement (5) est disposé entre un raccord aller (6) et un raccord retour (7) et un côté secondaire (4) avec un deuxième chemin d'écoulement (9) est disposé entre un raccord d'afflux (10) et un raccord de sortie (11), comprenant une soupape (14) pour commander un débit d'un fluide caloporteur à travers le côté primaire (3), la soupape présentant un dispositif d'actionnement (15) avec un élément en matière extensible (16), qui est disposé dans la région du raccord de sortie (11), et l'élément en matière extensible étant sollicité par la température du côté secondaire, l'échangeur thermique étant réalisé sous forme d'échangeur thermique à plaques, **caractérisé en ce que** la soupape (14) est disposée dans le boîtier (2) et **en ce que** l'élément en matière extensible (16) est en liaison thermoconductrice avec la paroi extérieure du deuxième chemin d'écoulement au niveau du raccord de sortie.

2. Échangeur thermique selon la revendication 1, **caractérisé en ce que** l'élément en matière extensible (16) est directement accouplé à la soupape (14).

3. Échangeur thermique selon l'une quelconque des revendications 1 à 2, **caractérisé en ce que** l'élément en matière extensible (16) présente une matière extensible non compressible.

4. Échangeur thermique selon la revendication 3, **caractérisé en ce que** la matière extensible est formée par de la cire ou un liquide.

5. Échangeur thermique selon l'une quelconque des revendications 1 à 4, **caractérisé en ce que** l'élément en matière extensible (16) peut être positionné dans l'échangeur thermique (1) parallèlement à sa direction d'action.

6. Échangeur thermique selon l'une quelconque des revendications 1 à 5, **caractérisé en ce que** la soupape (14) et le dispositif d'actionnement (15) sont disposés à la même hauteur par rapport au boîtier (2).

7. Échangeur thermique selon la revendication 6, **caractérisé en ce que** la soupape (14) est disposée au niveau du raccord aller (6) et le raccord aller (6) et le raccord de sortie (11) sont disposés à proximité d'une arête commune du boîtier (2).

8. Échangeur thermique selon l'une quelconque des revendications 1 à 7, **caractérisé en ce que** la soupape (14) est sollicitée par un ressort d'ouverture (17) dans la direction d'ouverture et par l'élément en matière extensible (16) dans la direction de fermeture.
